# EUROPEAN PATENT APPLICATION

(11) **EP 0 590 711 A1**
(43) Date of publication of application: **06.04.1994**
(21) Application number: 93202705.5
(22) Date of filing: 17.09.1993
(51) Int. Cl.: B09B 3/00, C04B 18/18, C02F 11/00

(54) **A method for the immobilisation of waste material contaminated with organic chemical compounds**

(30) Priority: 28.09.1992 NL 9201674
(71) Applicant: PELT & HOOYKAAS B.V., NL-3087 AA Rotterdam (NL)
(72) Inventor: Hooykaas, Carel Willem Jan, NL-3062 BT Rotterdam (NL); Newton, Jeffrey Porter, Wichita, Kansas 67208 (US)
(74) Representative: van der Kloet-Dorleijn, Geertruida W.F., Drs.

(57) **Abstract**

The application relates to a method for the immobilisation of organic contaminants in waste material, said method being directed in particular at the treatment of organochlorine and organophosphate pesticides which are difficult to decompose and which are contained in waste material, which material may be inadequately encapsulated by the known immobilisation processes. According to the invention, material contaminated with organic compounds is immobilised by mixing it with an inorganic hydraulic binder and, optionally, water and allowing the mixture to set, which method is characterised in that material contaminated with organic compounds which give off vaporous substances under alkaline conditions is immobilised by using an essentially calcium-free inorganic hydraulic binder, such as blast-furnace cement. Preferably, the waste material is, before the addition of said inorganic hydraulic binder converted to a state saturated with water, and at least one salt of a transition metal is added, such as iron (III) sulphate, followed by an oxidant, such as ammonium persulphate.

## Description

The invention relates to a method for the immobilisation of waste material contaminated with organic compounds, and more particularly, to material contaminated with organochlorine and organophosphate pesticides which are difficult to decompose.

Methods of inactivating organic impurities are known and comprise on-site and off-site treatment of the contaminated material, incineration thereof, or fixing with the aid of binders which set the material, i.e. immobilise it, which is for the time being the most advantageous and simplest method.

Normally, Portland cement and fly-ash cement are used as binder for immobilisation. The drawback of this procedure is, however, that organic compounds are only encapsulated in the waste material, while the formation of a cement matrix may be prevented if a high content of organic compounds is present, resulting in an unstable product.

The problem of the safe and relatively cheap treatment of soil, sludge and sediments which are contaminated with toxic organic waste compounds is an urgent one. With the ever-increasing production of dangerous substances in our industrial society, there is an increasing demand for strict controls on the handling of, and the removal of, all forms of toxic waste. In response to this demand, the legislating authorities have adopted laws which limit the amount and nature of waste which can be dumped in the environment. There is an increasing tendency to make these laws stricter and the achievement of the objectives laid down in the laws is becoming evermore difficult. However, there is an appreciable problem with regard to soil, sediments and sludge in which concentrations of organic contaminants have accumulated after the passage of time and in which the amounts of these compounds have reached levels which are harmful to the health of humans and animals.

The laws and regulations also state the standards which must be fulfilled by the industry which produces the waste, in general by setting maximum limits for the contaminants encountered in test samples as measured in relation to a lixiviation test or a solvent extraction standard. The objective of treatment processes for toxic waste is therefore to reduce to the lowest possible amounts, or at least to an amount below the set maximum, the waste present before and/or after the lixiviation in test samples.

As has already been stated above, organic contaminants may have the effect that they prevent the formation of a cement matrix, at least partially. It has in fact been observed that, on adding a greater amount of inorganic hydraulic binder, the lixiviation values of the material obtained after setting had quite clearly increased in certain cases, and it was possible to detect values up to a factor of 10³ higher.

Surprisingly, it has now been found that this effect is associated with the amount of calcium present in the hydraulic binder mixture used.

The invention therefore relates to a method of immobilising material contaminated with organic compounds by mixing the material with an inorganic hydraulic binder and, optionally, water and allowing the mixture obtained to set, which method is characterised in that material contaminated with organic compounds which give off vaporous substances under alkaline conditions is immobilised by using an essentially calcium-free inorganic hydraulic binder.

Preferably, material contaminated with pesticides is immobilised. Even the penetrating odour detected in the case of such substances even at very low concentrations was completely absent as a result of immobilisation according to the invention. In addition, the contaminants originally present could no longer be detected by subjecting the product obtained after setting to lixiviation tests.

Expediently, the essentially calcium-free inorganic hydraulic binder used is a mixture of ground, granulated blast furnace slags and Portland cement, also known as blast-furnace cement. It is remarked that blast furnace cement usually consists of from 30 to 75% of ground, granulated blast furnace slags, and from 25 to 70% of Portland cement. Other hydraulic binders can also be used, provided only that the calcium content thereof is very low or as low as possible.

The object of the invention is therefore to provide a treatment which can be carried out in situ or on site, which eliminates the disadvantages of the known methods of treating soil, sludge and sediments containing toxic organic contaminants, in particular pesticides.

According to the invention, a mixture of at least one salt of a transition metal and an oxidant is added to the waste material, before the addition of the inorganic hydraulic binder, specifically in such a way that at least one salt of a transition metal is first added to the waste material, which is in a state saturated with water, followed by the oxidant. The salt of a transition metal added is preferably the sulphate or the chloride, preferably the sulphate or the chloride of iron(II), iron(III) or manganese(II), but the other transition metals are equally satisfactory.

Expediently, the oxidant is chosen from the persulphates, in particular potassium, sodium or ammonium persulphate. As an alternative, even a peroxide may be used, or potassium or sodium permanganate.

According to a preferred embodiment of the invention, a mixture is formed which is composed of approximately 70% by weight of ammonium or sodium persulphate, the remainder being composed of iron(II) and/or iron(III) sulphate and/or manganese(II) sulphate. Preferably 3 to 10% by weight, relative to the soil, sediment or sludge, of this mixture of transition metal salt and oxidant is added, the soil, sludge or sediment to be treated already being saturated with water.

After completion of the above treatment, an inorganic hydraulic binder is added to the treated material and the mixture is allowed to set, as has been explained hereabove.

The invention further relates to the use of an essentially calcium-free inorganic hydraulic binder for the immobilisation of waste material contaminated with pesticides, said binder being preferably blast furnace cement.

### MORE DETAILED DESCRIPTION OF THE PREFERRED EMBODIMENT

The efficiency of treating soil types, sediments or sludge containing toxic waste is determined by the fraction of soil, sediment or sludge composed of the toxic components compared with the amount of such inorganic or organic toxic components which can lixiviate from the contaminated soil according to the prescribed lixiviation and solvent extraction tests as measured with, for example, a gas chromatograph.

It has been found that adding ammonium or sodium persulphate and/or iron(II) or iron(III) sulphate and manganese sulphate in the presence of water achieves a much better efficiency in the treatment of soil, sediments and sludge contaminated with organic toxic waste such as pesticides, polychlorinated biphenyl compounds, benzene, toluene, xylenes, naphthalene, anthracene, other polynuclear aromatic compounds and organic compounds containing unsaturated bonds. Obviously, this list does not exclude other organic and inorganic compounds and elements.

It is pointed out that the mechanism described below is given solely to provide an insight, as far as possible, into the mechanisms which are provided by the present process. Obviously, said mechanism does not serve to restrict the invention.

The various constituents to be added according to the present method probably result in a chemical alteration in the structure of toxic organic compounds as a result of the formation of oxidants or free radicals which attack the molecular positions next to unsaturated bonds, which in turn can result in a large number of complex formation reactions subsequent thereto. Said alterations convert the toxic organic compounds into harmless compounds and complexes, the total amount of free toxic constituents left behind in the material after treatment being reduced.

In particular, the oxidant is ammonium or sodium or potassium persulphate which is added after iron(II) or iron(III) sulphate or manganese sulphate is added to the soil, sediment or sludge which is sufficiently moist with water. This combination of compounds will, under these conditions, bring about a series of complex-forming chemical reactions subsequent thereto which will eliminate the presence of the toxic organic compounds as determined by a solvent extraction which is analysed using gas-chromatographic procedures.

The contaminated soil, sediment or sludge is mixed with a transition metal sulphate such as iron(II) or iron(III) sulphate or manganese sulphate in an amount of 1 to 3% by weight. The soil, sediment or sludge is moistened with water virtually to saturation. An oxidant such as potassium, sodium or ammonium persulphate is then added in an amount of, preferably, 1 to 7% by weight of the weight of the soil, sediment or sludge and the entire mixture of oxidant, transition metal sulphate and moist soil is mixed together in some way or other in order to obtain as complete mixing as possible. The mixing can be carried out on site, in the soil, sediment or sludge, or off site, outside the original position of the soil, sludge or sediment.

| Constituent | % by weight with respect to the soil |
|---|---|
| Transition metal | 1 to 3 |
| Oxidant | 3 to 7 |
| Water | As required |

At last an essentially calcium-free inorganic binder, preferably blast furnace cement, is added to the thus treated material, in an amount which is sufficient for the immobilisation of the treated material, to obtain a hard, rock-like material. From the hardened material, any leaching out of the originally present, toxic, organic material could no longer be determined.

The examples given below will illustrate the invention in greater detail.

### EXAMPLE I

The waste was composed of soil contaminated with organochlorine and organophosphate pesticides. The treatment used in this case comprised 3.5% by weight of ammonium persulphate, 1.5% by weight of iron (III) sulphate, and sufficient water to reach a saturation point. More particularly, the soil was originally moist and iron(III) sulphate was then mixed into the soil. Subsequently, ammonium persulphate was added and mixed with the above mixture. More water was added until a thin layer of water remained above the layer of soil. The chemical reactions took place as soon as the ammonium persulphate was added. The pH of the mixture decreased from 6 to 1 from the first to the last stage. This treated soil was allowed to stand for one week before analysis by infrared spectrometry was carried out. The figures below in the table for the untreated material were obtained by a solvent extraction test and the column after treatment states the results of a USEPA TCLP lixiviation test.

| ppb contamination (ppb) | Untreated material (ppb) | Treated material |
|---|---|---|
| Aldrin | 88,000 | 0,98 |
| Dieldrin | 49,000 | 1,07 |
| Endrin | 96,000 | ND |
| Parathion | 110,000 | ND |
| ND = not detectable ppb = parts per billion | | |

### EXAMPLE II

The treatment of contaminated soil described in Example I was repeated and an adequate amount of blast-furnace cement was then added to obtain a set product. The contaminants originally present could no longer be extracted from the product obtained after setting for 28 days.

As a comparison, the same amount of blast-furnace cement as above was added to the untreated soil and the mixture was allowed to set for 28 days. A few ppb's of aldrin and dieldrin can only be detected in the set product by extraction.

### COMPARISON EXAMPLE III

An adequate amount of Portland cement together with 3% of gypsum, and water, was added to the soil sample, containing contaminants, described in Example I, and the mixture was allowed to set for 28 days.

5,000 to 6,000 ppb of various contaminants can still be detected in the material obtained after setting. Increasing the amount of gypsum added had the result that it was possible to detect a larger amount of contaminants in the set product by means of the lixiviation test.

The invention is, of course, not restricted to the preferred embodiments described here, and various alterations and modifications can be made without departing from the scope of the invention.

## Claims

1. A method for the immobilisation of waste material contaminated with organic compounds by mixing the material with an inorganic hydraulic binder and, optionally, water and allowing the obtained mixture to set, characterised in that material contaminated with organic compounds which give off vaporous substances under alkaline conditions is immobilised by using an essentially calcium-free inorganic hydraulic binder.

2. A method according to claim 1, characterised in that material contaminated with pesticides is immobilised.

3. A method according to claim 1 or 2, characterised in that the essentially calcium-free inorganic hydraulic binder added is blast-furnace cement.

4. A method according to any one of claims 1 to 3, characterised in that to the waste material in at least a state saturated with water, before the addition of an essentially calcium-free inorganic hydraulic binder, first at least one salt of a transition metal, followed by an oxidant, is added.

5. A method according to claim 4, characterised in that the transition metal salt used is the sulphate or the chloride of iron(II), iron(III) or manganese.

6. A method according to claims 4 and 5, characterised in that the oxidant is chosen from the persulphates, in particular potassium, sodium and ammonium persulphate, and potassium or sodium permanganate.

7. A method according to claims 4, 5 and 6, characterised in that 1 - 3% by weight of transition metal salt and 3 - 7% by weight of oxidant, referred to the material to be treated, is used.

8. Use of an essentially calcium-free inorganic hydraulic binder for the immobilisation of waste material contaminated with pesticides.

9. Use according to claim 8, wherein blast furnace cement is used as an essentially calcium-free inorganic hydraulic binder.
